(19) Europäisches Patentamt / European Patent Office / Office européen des brevets

(11) **EP 2 746 581 B1**

(12) **FASCICULE DE BREVET EUROPEEN**

(45) Date de publication et mention
de la délivrance du brevet:
**16.08.2017   Bulletin 2017/33**

(51) Int Cl.:
***F03D 13/25*** *(2016.01)*

(21) Numéro de dépôt: **13306596.1**

(22) Date de dépôt: **21.11.2013**

(54) **Éolienne offshore sur support flottant désaxé**

Offshore-Windkraftanlage auf einem axial verschobenen schwimmenden Unterbau

Offshore wind turbine on an off-axis floating support

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **18.12.2012   FR 1203464**

(43) Date de publication de la demande:
**25.06.2014   Bulletin 2014/26**

(73) Titulaire: **IFP Énergies nouvelles
92852 Rueil-Malmaison Cedex (FR)**

(72) Inventeurs:
  • **Mabile, Claude
    92140 Clamart (FR)**
  • **Gilloteaux, Jean-Christophe
    92500 Rueil Malmaison (FR)**

(56) Documents cités:
**WO-A1-2012/085351     DE-A1-102011 016 824**

**Description**

La présente invention concerne le domaine technique des éoliennes offshore portées par des supports flottants. Minimiser, voire supprimer la perte d'horizontalité quand on place une éolienne à axe horizontal (ou verticalité dans le cas des éoliennes à axe vertical) sur un flotteur flottant est un des défis majeurs dans la conception des supports flottants. La présente invention permet, avec un flotteur ayant un axe principal, de garder l'axe de rotation de l'éolienne parfaitement horizontal, ou vertical, quelle que soit la force du vent dans le domaine de fonctionnement de l'éolienne.

Afin d'augmenter la capacité de production d'énergie électrique en mer, il est nécessaire de pouvoir installer des éoliennes dans des profondeurs d'eau importantes. L'industrie considère généralement qu'au delà de 50 mètres de profondeur d'eau il est plus économique de poser l'éolienne sur un support flottant plutôt que d'utiliser un support fixé au fond de la mer.

Cependant, poser une éolienne sur un support flottant fait apparaitre plusieurs difficultés, dont celle de la stabilité hydrostatique du système. En effet les éoliennes, qu'elles soient à axe horizontale (HAWT) ou à axe vertical (VAWT) sont des systèmes massifs (plusieurs centaines de tonne) et dont le centre de gravité est placé à plusieurs dizaines de mètre au dessus du pied de l'éolienne. Par exemple une éolienne de 5 MW a une masse d'environ 700 t (pales, nacelle et mât) dont le centre de gravité est à 70 m. Ces éoliennes sont d'une part sensibles à l'inclinaison de leur axe de rotation car celle-ci diminue l'efficacité de la production d'énergie, mais aussi aux mouvements du support flottant qui peuvent générer des accélérations importantes que l'on doit prendre en compte pour les calculs de structure.

Aussi, les principales contraintes de conception de l'architecte naval est de minimiser l'assiette du support flottant, ainsi que ses amplitudes de mouvement. L'amortissement des mouvements peut ainsi se faire en décalant les périodes de résonance du support flottant en jouant par la taille de ce dernier ou par l'ajout de plaques. En ce qui concerne le rappel hydrostatique, l'architecte naval a peu de moyens passifs pour contrer la gite. En fait, le moyen le plus performant est le concept de TLP (Tension Leg Plateform) qui par sa conception du système d'ancrage ne peut pas théoriquement giter. Mais ce mode de réalisation est couteux à construire et à mettre en place sur site.

D'autres solutions de flotteurs ou d'ancrages s'offrent à l'architecte naval. On cite, par exemple, une longue colonne verticale ballastée et avec des ancrages type caténaire. La masse de l'ensemble, ballast inclus, et sa forme élancée permettent de minimiser les mouvements. Cependant, ce principe ne permet pas de maintenir l'axe de l'éolienne suffisamment horizontal, ou vertical suivant son type. Par exemple, le pilote Hywind de Statoil (éolienne de 2,3 MW) comprend un flotteur constitué par une colonne de 100 m de haut par 8,3 m de diamètre et qui est ballasté par 3600 tonnes de pierre, pour un poids total de 5300 tonnes. Malgré ces dimensions très importantes, une gite statique de 3 degrés est admise. Or, l'éolienne de Hywind est une "petite" éolienne comparée à ce qui est prévu pour les futures éoliennes offshore flottantes dont l'optimum économique semble être entre 7 et 10 MW.

Un autre concept consiste au contraire à fixer l'éolienne sur un flotteur ancré directement au fond de la mer et libre en rotation. La flottabilité apportée par le flotteur évite le renversement de l'ensemble mais par son principe même, ce concept n'empêche pas la direction de l'axe de l'éolienne d'être soumis aux conséquences des assauts du vent, des vagues ou des courants.

Un autre concept, décrit dans la demande de brevet DE 10 2011 016 824 A1, consiste à réaliser une liaison rotule entre le mât et le flotteur pour maintenir le mât vertical.

Ainsi, la présente invention concerne une éolienne offshore sur support flottant comportant soit un rotor à axe de rotation horizontal (HAWT), soit un rotor à axe de rotation vertical (VAWT), ledit rotor étant monté sur un support flottant ayant un axe principal. Selon l'invention, l'axe principal du support flottant est désaxé d'un angle fixe α par rapport : soit à l'axe d'un mât portant le rotor à axe de rotation horizontal, soit à l'axe de rotation du rotor à axe de rotation vertical.

Le support flottant peut comporter un lest fixe à sa base

Le support flottant peut comporter un système de ballast hydraulique pour déplacer une masse de liquide le long de l'axe principal.

Le support flottant peut comprendre au moins deux réservoirs, un à la base et un en partie haute et un système de transfert de liquide entre les deux réservoirs.

Un système d'ancrage au fond de la mer peut être fixé à la base du support flottant.

L'éolienne peut comporter des appareils de mesure de l'inclinaison et, des moyens de commande du système de ballastage en fonction de l'inclinaison mesurée.

Le support flottant peut être de forme cylindrique.

Le support flottant peut être de forme de révolution.

La présente invention sera mieux comprise à la lecture de la description qui suit, nullement limitative et illustrée par les figures ci-après annexées, parmi lesquelles:

- les figures 1a et 1b représentent schématiquement l'éolienne selon l'invention, respectivement une HAWT et une VAWT,

- la figure 2 représente le diagramme des forces sur le système,
- la figure 3 donne la nomenclature utilisée dans les calculs,
- la figure 4 illustre les avantages de la présente invention.

Pour remédier aux inconvénients constatés sur les concepts différents des "TLP", on propose de construire une éolienne offshore flottante en désaxant d'un angle déterminé l'axe du mât pour une HAWT, ou l'axe du rotor de l'éolienne pour une VAWT, par rapport à l'axe principal du support flottant.

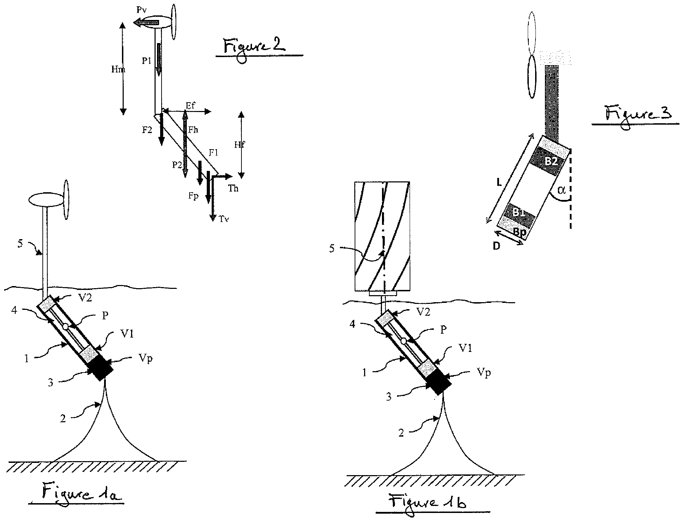

Selon la figure 1a, le support flottant 1 est de préférence de forme cylindrique et est ancré au fond de la mer de façon préférentielle par des lignes caténaires 2 fixées au niveau de la quille 3.

L'espace intérieur du flotteur est compartimenté en 4 volumes:

1. Un volume Vp situé en bas du flotteur et constitué d'un ballast permanent. Celui-ci peut-être par exemple en ciment ou une masse de grenailles, roches ou métaux.
2. Un volume V1 situé au-dessus du volume Bp et partiellement rempli de liquide, par exemple de l'eau de mer.
3. Un volume V2 situé au sommet du flotteur et partiellement rempli d'un même liquide, par exemple de l'eau de mer.
4. Un volume 4 assurant la flottabilité de l'ensemble : support flottant et éolienne 5, HAWT selon la figure 1a et VAWT selon la figure 1b.

Le volume Vp est totalement rempli d'un ballast solide de masse Bp.

Les volumes V1 et V2 sont partiellement remplis de liquide d'une quantité respective B1 et B2. Un système de conduites et de pompes P permet le transfert d'une quantité de liquide du volume V1 vers V2. Le transfert inverse peut se faire soit par gravité soit à l'aide de la pompe P. Par construction, le volume total de liquide B1 + B2, préférentiellement l'eau de mer, qui sert de ballast mobile dans le flotteur, est fixe et se répartit dans les volumes V1 et V2.

L'action du vent sur l'éolienne, qu'elle soit HAWT ou VAWT, induit des efforts qui tendent à faire pencher le flotteur, on parle alors d'angle d'assiette. La présence des ballasts B1 et B2 permet ainsi, en fonction de leurs positions relatives et de leur taux remplissage, de corriger ce changement d'assiette. Une étude de stabilité a été menée avec la géométrie et les efforts représentés sur la figure 2.

Nomenclature:

➢ Pv : poussée due au vent

➢ P1 : force due au poids de l'éolienne

➢ P2 : force due au poids du flotteur

➢ Fh : poussée d'Archimède due au volume immergé du flotteur

➢ F1, F2, Fp : forces dues aux masses des ballasts B1, B2 et Bp

➢ Tv, Th tractions verticales et horizontales exercées par le système d'ancrage

➢ Hm : hauteur du mât de l'éolienne

➢ Hf, Ef : dimensions dépendant de la longueur du flotteur et de l'angle entre mat et flotteur

Les équations d'équilibre des forces sont :

$$Pv+Th = 0 \qquad (1)$$

$$P1+F2+P2+F1+Fp+Tv-Fh=0 \qquad (2)$$

L'équation d'équilibre des moments est calculée par rapport au point d'ancrage des amarres. On considère que F2 s'applique en tête du flotteur et que F1 et Fp en pieds, ceci n'est pas strictement exact mais simplifie la compréhension de l'exemple décrit ici.

$$Pv\times(Hm+Hf)+F2\times Ef+P2\times Ef/2-Fh\times Ef/2=0 \qquad (3)$$

En considérant un ancrage de type caténaire, Tv, la traction verticale de l'ancrage est, en première approximation, constante et ne dépend que du type d'ancrage choisi et de la profondeur d'eau. Par définition F1+F2 est aussi une constante car cette somme représente la quantité totale d'eau de mer contenue dans le flotteur et qui sert de ballast mobile. Aussi, l'équation (2) permet de déterminer le volume qu'il faut donner au flotteur pour générer une poussée Fh suffisante pour contrecarrer l'ensemble des forces dues à la gravité.

L'équation (3) peut aussi s'écrire:

$$F2 \times Ef = (-Pv \times (Hm+Hf)-P2 \times Ef/2)+Fh \times Ef/2$$

ou

$$F2 = -Pv \times (Hm+Hf)/Ef + (Fh-P2)/2 \qquad (4)$$

L'équation (4) montre que si la poussée vélique Pv varie car la vitesse du vent a changé, on peut maintenir le mât de l'éolienne vertical en adaptant le volume d'eau du ballast B2 pour faire varier F2.

Dans l'équation 4 apparait la rapport (Hm+Hf)/Ef. Ce rapport dépend de la longueur totale du flotteur L (figure 3) et de l'angle $\alpha$ fixe entre l'axe du flotteur et celui du mat de l'éolienne pour une HAWT. En effet:

$$Hf = L \cos(\alpha)$$

$$Ef = L \sin(\alpha)$$

Soit :

$$(Hm+Hf)/Ef = (Hm + L \cos(\alpha))/L \sin(\alpha)$$

Par construction et suivant les conditions de vent et les caractéristiques de l'éolienne, un choix judicieux de la longueur L du flotteur et de l'angle $\alpha$ entre l'axe du flotteur et l'axe du mât pour une HAWT ou l'axe du rotor pour VAWT permet d'optimiser la masse d'eau B2.

La démonstration qui vient d'être faite pour une HAWT peut-être menée de la même façon pour un VAWT pour parvenir aux mêmes conclusions. Dans le cas d'une VAWT, l'axe du rotor correspond au mat d'une éolienne HAWT.

**Etude de stabilité hydrostatique sans force de poussée vélique**

Cinq principaux paramètres interviennent dans l'étude de stabilité de ce concept:

1. La longueur L du flotteur
2. Le diamètre D du flotteur
3. L'angle $\alpha$ entre l'axe du flotteur et celui du mât
4. Le ballast Bp permanent en fond de flotteur
5. Le ballast variable B1 pour maintenir le mât de l'éolienne vertical, sachant que B1+B2 est une constant pour L et D fixés.

Une première étude consiste à faire varier la répartition du ballast Bp et du volume de fluide B1+B2 pour une configuration géométrique donnée (inclinaison, longueur, diamètre), et ainsi examiner quelles sont les meilleurs paramètres L, D et $\alpha$ en terme de stabilité hydrostatique du support flottant.

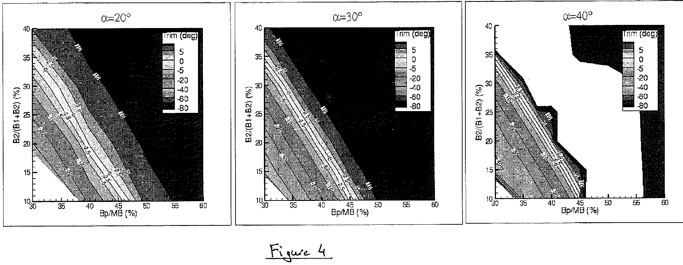

Les sous-figures de la figure 4 montrent ainsi la variation de l'angle d'assiette (Trim) du support flottant en fonction du pourcentage du ballast Bp par rapport à la masse totale (MB) de ballast et le pourcentage de fluide dans le volume V2 rapporté à la masse totale de fluide B1 + B2. Ces trois sous-figures représentent les résultats pour trois inclinaisons de support différentes (20°, 30°, 40°) lorsque le flotteur a une longueur de 80 m, et un diamètre de 20 m. On remarque alors que lorsque l'inclinaison est fixée à 40° de nombreuses solutions instables (zones blanches) ou donnant un angle d'assiette important apparaissent. On voit également qu'il existe pour chaque couple de paramètres une solution à angle d'assiette nul, ce résultat est cependant pondéré par le fait que pour un écart faible en ballast dynamique ou permanent le support devient rapidement instable. En revanche, pour les autres angles d'inclinaison (20° et 30°), le support flottant est stable quel que soit la répartition de ballast et présente des solutions à angle d'assiette nul. On peut également remarquer que, de manière générale, plus l'angle d'inclinaison est important et plus les courbes iso-assiette sont resserrées autour de 0° et donc sensible à la répartition de ballast.

**Etude de stabilité hydrostatique avec force de poussée vélique maximale**

La première étude ayant permis d'identifier des répartitions de ballast plausibles pour des configurations géométriques données, l'étape suivante consiste à regarder comment se comporte le flotteur lorsque l'éolienne fonctionne. La présence de la nacelle et des pales de l'éolienne est représentée simplement par une force de poussée constante de 80 tonnes qui est représentative de la force de poussée maximale générée par une éolienne à axe horizontal de 5MW lorsque celle-ci tourne à vitesse nominale.
Le tableau ci-dessous montre ainsi la masse de d'eau qu'il est nécessaire d'avoir dans le ballast B1 pour obtenir un angle d'assiette nul pour six configurations géométriques données. Deux angles d'inclinaison $\alpha$ différents (20° et 30°) ont été retenus ainsi que trois longueurs L de support (60 m, 80 m et 100 m). Pour chaque configuration, on choisit la répartition de ballast donnée pour une force de poussée nulle et on fait varier la répartition du ballast dynamique afin de corriger l'angle d'assiette jusqu'à obtenir un angle d'assiette nul. On remarque alors que le transfert d'eau est très faible en pourcentage, de l'ordre de 5%, par rapport à la configuration sans force de poussée.

| **B2** | | Longueur du flotteur L (m) | | |
|---|---|---|---|---|
| | | 60 | 80 | 100 |
| Angle $\alpha$ (deg) | 20 | **544 t** | **733 t** | **922 t** |
| | 30 | **435 t** | **733 t** | **1110 t** |

D'autres études ont aussi été menées comme l'influence d'un changement d'axe de la poussée du vent. Lorsque le vent change rapidement de direction, l'éolienne, la poussée du vent sur l'éolienne n'est alors plus dans le plan constitué du mât et du flotteur. Ces études ont montré que l'éolienne s'incline alors de quelques degrés mais reste néanmoins stable. Du fait que l'axe de poussée du vent est décalé par rapport au point d'ancrage, l'éolienne va s'aligner automatiquement dans la direction du vent. Cette action ne sera pas immédiate mais, après quelques minutes, la poussée du vent reviendra dans le plan constitué de l'axe du mât de l'éolienne et celui du flotteur. Ainsi, l'ensemble se redressera.
Ces simulations montrent d'une part que le concept est stable à condition d'un choix opportun des principaux paramètres de dimensionnement mais aussi que le ballastage dynamique pour maintenir le mât de l'éolienne pour une HAWT, ou l'axe de rotation vertical pour une VAWT, est tout à fait réalisable.
Ainsi, la présente invention est constituée d'un flotteur de forme simple sur lequel l'éolienne est posée de telle façon que l'axe principal du flotteur et l'axe de référence de l'éolienne fasse un angle constant. Ce concept permet de garder l'axe de l'éolienne horizontal pour une HAWT ou l'axe de rotation vertical pour une VAWT, en déplaçant un liquide d'un ballast à l'autre. On a montré que si les conditions de vent viennent à changer, l'éolienne va certes s'incliner mais, soit par ballastage en cas de changement de la force du vent, soit par un réalignement naturel en cas de changement de direction du vent, l'éolienne va retrouver une position qui va garantir une production d'électricité optimale.

**Revendications**

1. Éolienne offshore sur support flottant (1) comportant soit un rotor à axe de rotation horizontal (HAWT), soit un rotor à axe de rotation vertical (VAWT), ledit rotor étant monté sur un support flottant ayant un axe principal, **caractérisée en ce que** ledit axe principal du support flottant est désaxé d'un angle $\alpha$ fixe par rapport : soit à l'axe d'un mât portant le rotor à axe de rotation horizontal, soit à l'axe de rotation du rotor à axe de rotation vertical.

2. Éolienne selon la revendication 1, dans laquelle ledit support flottant comporte un lest fixe à sa base (BP).

3. Éolienne selon l'une des revendication 1 ou 2, dans laquelle ledit support flottant comporte un système de ballast hydraulique pour déplacer une masse de liquide le long de l'axe principal.

4. Éolienne selon la revendication 3, dans laquelle ledit support flottant comprend au moins deux réservoirs, un à la base et un en partie haute et un système de transfert de liquide entre lesdits deux réservoirs.

5. Éolienne selon l'une des revendications précédentes, dans laquelle un système d'ancrage au fond de la mer est fixé à la base du support flottant.

6. Éolienne selon l'une des revendications précédentes, comportant des appareils de mesure de l'inclinaison et, des moyens de commande du système de ballastage en fonction de l'inclinaison mesurée.

7. Éolienne selon l'une des revendications précédentes, dans laquelle ledit support flottant est de forme cylindrique.

8. Éolienne selon l'une des revendications précédentes, dans laquelle ledit support flottant est de forme de révolution.

## Patentansprüche

1. Offshore-Windkraftanlage auf einem schwimmenden Unterbau (1), umfassend entweder einen Rotor mit horizontaler Rotationsachse (HAWT) oder einen Rotor mit vertikaler Rotationsachse (VAWT), wobei der Rotor auf einem schwimmenden Unterbau montiert ist, der eine Hauptachse aufweist, **dadurch gekennzeichnet, dass** die Hauptachse des schwimmenden Unterbaus axial um einen Winkel $\alpha$ verschoben ist, der entweder in Bezug auf: die Achse eines Masten, der den Rotor mit horizontaler Rotationsachse trägt, oder auf die Rotationsachse des Rotors mit vertikaler Rotationsachse fest ist.

2. Windkraftanlage nach Anspruch 1, wobei der schwimmende Unterbau einen festen Ballast an seiner Basis (BP) umfasst.

3. Windkraftanlage nach einem der Ansprüche 1 oder 2, wobei der schwimmende Unterbau ein hydraulisches Ballastsystem zum Bewegen einer Flüssigkeitsmasse entlang der Hauptachse umfasst.

4. Windkraftanlage nach Anspruch 3, wobei der schwimmende Unterbau mindestens zwei Tanks, einen an der Basis und einen im oberen Teil, und ein System zur Übertragung von Flüssigkeit zwischen den zwei Tanks umfasst.

5. Windkraftanlage nach einem der vorhergehenden Ansprüche, wobei ein System zur Verankerung am Meeresgrund an der Basis des schwimmenden Unterbaus befestigt ist.

6. Windkraftanlage nach einem der vorhergehenden Ansprüche, umfassend Geräte zum Messen der Neigung und Mittel zur Steuerung des Ballastierungssystems in Abhängigkeit von der gemessenen Neigung.

7. Windkraftanlage nach einem der vorhergehenden Ansprüche, wobei der schwimmende Unterbau zylinderförmig ist.

8. Windkraftanlage nach einem der vorhergehenden Ansprüche, wobei der schwimmende Unterbau ein Rotationskörper ist.

## Claims

1. An offshore wind turbine on a floating support (1) comprising either a rotor with a horizontal rotation axis (horizontal-axis wind turbine HAWT) or a rotor with a vertical rotation axis (vertical-axis wind turbine VAWT), said rotor being mounted on a floating support having a principal axis, **characterized in that** said principal axis of the floating support is offset by an angle $\alpha$ with respect to: either the axis of a tower carrying the horizontal-axis rotor or to the rotation axis of the vertical-axis rotor.

2. A wind turbine as claimed in claim 1, wherein said floating support comprises a fixed ballast at the base thereof (BP).

3. A wind turbine as claimed in any one of claims 1 or 2, wherein said floating support comprises a hydraulic ballast system for displacing a mass of liquid along the principal axis.

4. A wind turbine as claimed in claim 3, wherein said floating support comprises at least two tanks, one at the base and one in the upper part, and a liquid transfer system between said two tanks.

5. A wind turbine as claimed in any one of the previous claims, wherein a sea bottom anchoring system is fastened to the base of the floating support.

6.  A wind turbine as claimed in any one of the previous claims, comprising inclination measuring means and means of controlling the ballast system according to the measured inclination.

7.  A wind turbine as claimed in any one of the previous claims, wherein said floating support has a cylindrical shape.

8.  A wind turbine as claimed in any one of the previous claims, wherein said floating support has the shape of a solid of revolution.

Figure 2

Figure 3

Figure 1a

Figure 1b

Figure 4

**EP 2 746 581 B1**

**RÉFÉRENCES CITÉES DANS LA DESCRIPTION**

**Documents brevets cités dans la description**

- DE 102011016824 A1